(19) **Europäisches Patentamt**
**European Patent Office**
**Office européen des brevets**

(11) **EP 1 679 981 B1**

(12) **EUROPÄISCHE PATENTSCHRIFT**

(45) Veröffentlichungstag und Bekanntmachung des Hinweises auf die Patenterteilung:
**23.09.2009 Patentblatt 2009/39**

(21) Anmeldenummer: **04787066.2**

(22) Anmeldetag: **30.09.2004**

(51) Int Cl.:
**A23L 2/02** (2006.01)

(86) Internationale Anmeldenummer:
**PCT/EP2004/010931**

(87) Internationale Veröffentlichungsnummer:
**WO 2005/046361 (26.05.2005 Gazette 2005/21)**

(54) **PROTEINPULVER UND DARAUS ERHALTENES PROTEINHALTIGES GETRÄNK**

PROTEIN POWDER AND PROTEIN-CONTAINING DRINK OBTAINED THEREFROM

POUDRE DE PROTEINE ET BOISSON PROTEINIQUE OBTENUE A PARTIR DE CETTE DERNIERE

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **20.10.2003 DE 10348539**

(43) Veröffentlichungstag der Anmeldung:
**19.07.2006 Patentblatt 2006/29**

(73) Patentinhaber: **RUDOLF WILD GmbH & CO. KG**
**69052 Heidelberg (DE)**

(72) Erfinder:
• **WILD, Hans-Peter**
 **69214 Eppelheim (DE)**
• **ELLER, Thomas**
 **14167 Berlin (DE)**

• **SASS, Matthias**
 **68723 Oftersheim (DE)**
• **RIMMLER, Susanne**
 **68723 Plankstadt (DE)**

(74) Vertreter: **Grünecker, Kinkeldey, Stockmair & Schwanhäusser**
**Anwaltssozietät**
**Leopoldstrasse 4**
**80802 München (DE)**

(56) Entgegenhaltungen:
**EP-A- 1 338 210**          **JP-A- 10 313 781**
**US-A- 3 922 375**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Proteinpulver, ein Verfahren zur Herstellung dieses Proteinpulvers und die Verwendung dieses Proteinpulvers zur Herstellung eines proteinhaltigen Getränks mit verbesserter Haltbarkeit. Weiterhin betrifft die vorliegende Erfindung ein Verfahren zur Herstellung eines proteinhaltigen Getränks sowie das dadurch erhaltene proteinhaltige Getränk.

Trübungsmittel werden vielfältig in der Lebensmittelindustrie bei der Getränkeherstellung von z.B. Erfrischungsgetränken oder Fruchtsafterzeugnissen eingesetzt. Durch die Trübungsmittel wird ein gewünschter Trübungseffekt ausgelöst, der den Anschein eines Fruchtsaftanteils im Getränk erweckt. Trübungsmittel lösen eine Trübung aus oder tragen zur Trübung bei, sollen dabei aber nicht die Stabilität beeinflussen, einen Ring am Flaschenhals bilden oder sich am Boden absetzen (Sedimentation). Beispiele bekannter Trübungsmittel beinhalten entsaftete und zerkleinerte Zitrusfrüchte bzw. Zitrusschalenextrakte mit oder ohne Zusatz pflanzlicher Fette, Trägerstoffe, Phosphat, gegebenenfalls synthetischer Aromastoffe oder mikroverkapselter Zitrusöle. Auch bromierte Pflanzenöle waren als Trübungsmittel in Getränken und kaltlöslichen Trockenmischungen verbreitet. Die Verwendung dieser bromierten Pflanzenöle ging jedoch wegen gesundheitlicher Vorschriften und dem steigenden Interesse der Verbraucher an gesünderen Getränken zurück.

Daher wurde der Einsatz von stabilen Proteinen als Trübungsmittel und Nahrungsergänzungsmittel in Betracht gezogen. Beispiele der Proteine beinhalten u.a. Milch- und Molkeproteine aber auch Proteine auf Pflanzenbasis, wie Sojaproteine. Der Nachteil der Proteine liegt darin, dass sie am oder nahe dem isoelektrischen Punkt unlöslich sind und ausfallen, was ihre Eignung als Trübungsmittel in sauren Getränken nachteilig beeinflusst. Dies hat zur Folge, dass die Proteine in diesem Zustand nicht als Trübungsmittel geeignet sind.

Bei der Entwicklung eines Trübungsmittels, das nicht die Farbe oder den Geschmack des Getränks beeinflusst oder ein Gesundheitsrisiko darstellt, wurden von Klavons et al. (J Food Sci 57 4 945-947(1992)) stabile Sojaproteinpartikel entwickelt, bei denen das Sojaprotein eine stabile Trübung nur dann bildete, wenn lösliches Pektin in dem Inkubationsmedium vorhanden war, als sich die Partikel bildeten. Dieses Ergebnis wurde von Jasentuliyana et al. (J Sci Food Agric 78 389-394 (1998)) optimiert, um das beste Verhältnis von Pektin zu der Sojaproteinfraktion zu bestimmen, das die stabilste Trübung ergab.

In diesen wissenschaftlichen Studien wird die bekannte stabilisierende Wirkung von Proteinen, insbesondere Proteinen aus Milch oder Molke und Sojaproteinen, durch Pektin, insbesondere Pektin mit einem hohen Veresterungsgrad, ausgenutzt. Das stabilisierende Prinzip ist die Schutzkolloidwirkung des Pektins um die Proteinmoleküle. Dadurch wird erreicht, dass trotz einer Absenkung des pH-Wertes unterhalb des isoelektrischen Punkts eine stabile Proteindispersion mit Hilfe von Homogenisation erzielt werden kann. Wie vorstehend beschrieben, würden ohne das Vorhandenseins von Pektin beispielsweise die Caseine der Kuhmilch am isoelektrischen Punkt (pH 4,6) irreversibel denaturieren und ausfallen.

Die wesentlichen Verfahrensschritte bei der vorstehend beschriebenen Methodik zur Herstellung von stabilen Trübungsmitteln auf Proteinbasis werden im folgenden beispielhaft ausgeführt:

- Lösen des Pektins in Wasser oder direkt in der Milch,
- Erhitzen, um das Pektin zu hydratisieren,
- Langsame Zugabe einer Säure, um den pH-Wert abzusenken,
- Erhitzen auf z.B. 90°C,
- Zweistufige Homogenisation, z. B. bei 250 bar / 50 bar,
- Abkühlen auf z.B. 20°C.

Das flüssige Produkt wird dann direkt zur Herstellung von Getränken eingesetzt.

Dies zeigt, dass das vorstehend beschriebene Verfahren einen recht hohen technischen Aufwand benötigt, um ein stabiles Produkt als Trübungsmittel zu erhalten. Außerdem werden mit diesem Verfahren zufriedenstellende Ergebnisse bei den Fruchtsäften nur erzielt, wenn der proteinhaltige Rohstoff in frischer Form vorliegt, wenn also frische Kuhmilch oder Sojamilch verwendet werden. Wird statt der Milch ein Milchpulver eingesetzt, so wird die Stabilisierung sehr schwierig oder gar unmöglich, weil die Proteinstrukturen durch die Trocknung bereits irreversibel geschädigt sind. Es kommt bereits nach kurzer Zeit zu einer Ringbildung oder Sedimentation des Trübungsmittels.

Für eine industrielle Verarbeitung ist jedoch der Einsatz eines Pulvers bei der Getränkeherstellung im Hinblick auf die Haltbarkeit und die Lagerung und auch die Platzersparnis gegenüber frischer Ware von Vorteil. Es besteht daher ein wirtschaftliches Interesse daran, als Ausgangsstoff für ein Trübungsmittel für Getränke nicht nur den proteinhaltigen Rohstoff in frischer Form, sondern auch in getrockneter Form zu verwenden.

Die Stabilität der erhaltenen Getränke mit einem proteinhaltigen Rohstoff in getrockneter Form kann durch Modifikation der Stabilisatormenge, der Homogenisationsbedingungen und der Anzahl der Homogenisationsdurchgänge in gewissen Grenzen verbessert werden. Allerdings wird keine Haltbarkeit erreicht, die für die Vermarktung von Getränkeprodukten im großen Maßstab geeignet wäre.

Getrocknetes Proteinpulver und seine Verwendung für Getränke ist bereits hinlänglich bekannt. So wird in Food-Technology 55(12), 65 (2001) die Verwendung eines reinen Sojaproteinpulvers für Getränke beschrieben. Die Verwendung dieses Proteinpulvers führt zu verbesserten sensorischen Eigenschaften, wie Mundgefühl, und physikalischen Eigenschaften, wie Viskosität und Emulgierfähigkeit. Eine Verwendung für saure Getränke wird nicht erwähnt.

Ein Aromaverstärker, der aus Sojaprotein hergestellt wird, wird in der US-A-6,190,709 beschrieben, wobei dieser sich u.a. gut für Getränke eignet. Auch hier werden verbesserte Eigenschaften bezüglich der Textur, des Mundgefühls und der Viskosität geltend gemacht.

In Food-Hydrocolloids, 10(4), 431-439 (1996) wird die Anwendung von molkeproteinstabilisierten Emulsionen beschrieben. Es werden physikalische Eigenschaften, wie Dispergierbarkeit, Befeuchtungsfähigkeit und Emulsionsstabilität diskutiert. Hier wirkt das Molkeprotein selbst als Stabilisator für die Emulsion, während die Stabilisierung des Proteins nicht diskutiert wird. Zudem werden Einflussfaktoren auf die Erhaltung der Eigenschaften des sprühgetrockneten Materials dargestellt.

Daher waren bisher Proteinpulver von Proteinen, Proteinisolaten oder Fraktionen aus Soja und Milch in erster Linie im Hinblick auf die Emulgierfähigkeit, Löslichkeit und Sensorik (Geruch, Geschmack, Mundgefühl) bekannt. Eine optimierte Funktion im Hinblick auf die Anwendung im sauren pH-Bereich, insbesondere bei Getränken, wurde bisher nicht beschrieben.

Außerdem ist die stabilisierende Wirkung von Carboxymethylcellulose bei Proteinen, insbesondere bei Molke, Milch und Sojaproteinen, bekannt. Derartige stabilisierende Wirkungen und die Bildung von Protein-Carboxymethylcellulosekomplexen werden z.B. in Gerard M. et al., Journal of Food Science, 2002, 67 (1) 113-119; Arvind et al., Process Biochemistry 2000, 35 (8), 777-785 und Delben S. et al., Journal of Food Engineering 1997, 33(3), 325-346 beschrieben. Diftis N. et al. beschreiben in Food Chemistry 2003, 81, 1-6 die Verbesserung der Emulgiereigenschaften eines Sojabohnenproteinisolats durch Konjugation mit Carboxymethylcellulose. Dazu wird das Sojabohnenproteinisolat mit der Carboxymethylcellulose vermischt und bei 60°C bis zu 5 Wochen trocken erhitzt. Der Einsatz von den Sojaproteinen wird bei bestimmten Lebensmitteln, z.B. Majonaise, Salatcreme, Milch und Sahne beschrieben. Der Einsatz bei Getränken, insbesondere Getränken im sauren pH-Bereich, wird nicht erwähnt.

EP-A-1 338 210 beschreibt ein proteinstabilisierendes Mittel zur Verwendung in einer wässrigen sauren Flüssigkeit wie beispielsweise in Fruchtsäften. Dieses Mittel umfasst ein Pektin mit hohem Methoxygehalt und ein Propylenglycolalginat.

Es ist deshalb die Aufgabe der vorliegende Erfindung, stabile Trübungsmittel oder Nahrungsergänzungsmittel mit guter Lagerfähigkeit zur Verfügung zu stellen, die in Getränken, insbesondere in Fruchtsäften und fruchtsafthaltigen Getränken, einsetzbar sind, und eine lange Haltbarkeit dieses Getränks gewährleisten können. Gleichzeitig sollen diese Trübungsmittel oder Nahrungsergänzungsmittel in dem Getränk den Geschmack oder die Farbe des Getränks nicht negativ beeinflussen und keine potentielle Gesundheitsgefährdung hervorrufen.

Diese Aufgabe wird gelöst durch ein Proteinpulver, enthaltend mindestens eine Proteinquelle und einen Stabilisator, ausgewählt aus verestertem Pektin und/oder Carboxymethylcellulose, erhältlich durch:

- Vermischen einer Proteinquelle mit einem Stabilisator,
- Erhitzen des Gemisches,
- Homogenisieren des Gemisches und
- Trocknen des Gemisches, um ein Pulver zu erhalten,

wobei die Proteinquelle ausgewählt wird aus Kuhmilch, Schafsmilch, Ziegenmilch, Stutenmilch, Molke, Sojamilch, Hafermilch und Reismilch.

Desweiteren betrifft die vorliegende Erfindung ein Verfahren zur Herstellung eines Proteinpulvers, enthaltend mindestens eine Proteinquelle und einen Stabilisator, ausgewählt aus verestertem Pektin und/oder Carboxymethylcellulose, umfassend die folgenden Schritte:

- Vermischen einer Proteinquelle mit einem Stabilisator,
- Erhitzen des Gemisches,
- Homogenisieren des Gemisches und
- Trocknen des Gemisches, um ein Pulver zu erhalten,

wobei die Proteinquelle ausgewählt wird aus Kuhmilch, Schafsmilch, Ziegenmilch, Stutenmilch, Molke, Sojamilch, Hafermilch und Reismilch.

Ferner betrifft die vorliegende Erfindung auch die Verwendung dieses Proteinpulvers zur Herstellung eines proteinhaltigen Getränks.

Als weiterer Aspekt betrifft die vorliegende Erfindung ein Verfahren zur Herstellung eines proteinhaltigen Getränks, umfassend die folgenden Schritte:

- Auflösen des vorstehend erhaltenen Proteinpulvers in einem flüssigen Medium,
- Erhitzen der Flüssigkeit und
- Homogenisieren der Flüssigkeit.

Außerdem beschreibt die vorliegende Erfindung ein proteinhaltiges Getränk, das durch dieses Verfahren erhältlich ist:

- Auflösen des vorstehend erhaltenen Proteinpulvers in einem flüssigen Medium,
- Erhitzen der Flüssigkeit und
- Homogenisieren der Flüssigkeit.

Als weiterer Aspekt betrifft die vorliegende Erfindung ein Verfahren zur Herstellung eines proteinhaltige Getränks, umfassend die folgenden Schritte:

- Auflösen des vorstehend erhaltenen Proteinpulvers in einem flüssigen Medium,
- Einsatz zum Sofortverzehr.

Außerdem beschreibt die vorliegende Erfindung ein proteinhaltiges Getränk, das durch dieses Verfahren erhältlich ist.

Die Erfindung wird im folgenden näher im Hinblick auf die bevorzugten Ausführungsformen erläutert.

Es wurde überraschenderweise festgestellt, dass sich das erfindungsgemäße Proteinpulver von herkömmlichem Proteinpulver unterscheidet, da zum ersten Mal ein stabiles Trübungsmittel bzw. Nahrungsergänzungsmittel in Pulverform zur Verfügung gestellt werden kann, das in saurem Milieu stabil ist. Wenn dieses Proteinpulver bei der Getränkeherstellung, insbesondere bei der Herstellung von Fruchtsäften und fruchtsafthaltigen Getränken, eingesetzt wird, bleibt die Trübung über einen langen Zeitraum stabil, und es wird eine verbesserte Haltbarkeit nicht nur gegenüber Trübungsmitteln, aus herkömmlichen Proteinpulvern, sondern auch aus frischer Ware, wie Kuhmilch oder Sojamilch, erreicht. Dieser Effekt war völlig überraschend, da durch die Hitzebelastung des Proteins bei der Herstellung des Pulvers, insbesondere bei dem Trocknungsschritt, eine Schädigung des Proteins zu erwarten gewesen wäre. Das somit erhältliche proteinhaltige Getränk unterscheidet sich daher im Hinblick auf seine innere Zusammensetzung von bekannten proteinhaltigen Getränken, die als Erfrischungsgetränke hergestellt werden, da zum ersten Mal eine lange Haltbarkeit bei normalen Temperaturen und einem sauren pH-Wert beobachtet wird.

Es hat sich gezeigt, dass die vorstehend genannten Verfahrensschritte bei der Herstellung des erfindungsgemäßen Proteinpulvers bewirken, dass die Proteinquelle zusammen mit dem vorstehend beschriebenen Stabilisator in einer anderen strukturellen Zusammensetzung vorliegen, als wenn das Proteinpulver und der Stabilisator in Pulverform lediglich miteinander vermischt werden. Es wird deshalb davon ausgegangen, dass durch die erfindungsgemäß durchgeführten Verfahrensschritte eine Veränderung in der Struktur zwischen der Proteinquelle und dem Stabilisator eintritt, die für die verbesserten Eigenschaften verantwortlich ist.

Das erfindungsgemäße Proteinpulver enthält mindestens eine Proteinquelle, wobei die Proteinquelle ausgewählt wird aus Kuhmilch, Schafsmilch, Ziegenmilch, Stutenmilch, Molke, Sojamilch, Kafermilch und Reismilch. Bei der Proteinquelle handelt es sich um Proteine, die in flüssiger Form vorliegen. Dabei kann es sich um eine einzelne Proteinart oder eine Mischung von Proteinen handeln. Eine Mischung aus Proteinen wird erhalten, wenn eine Proteinquelle mehrere Proteine enthält oder indem einzelne Proteinquellen miteinander vermischt werden. Im Hinblick darauf, dass das erfindungsgemäße Proteinpulver in der Lebensmittelindustrie eingesetzt werden soll, sollte das Protein gesundheitlich unbedenklich sein. Das Protein kann auf pflanzlicher oder tierischer Basis sein. Besonders bevorzugt sind Kuhmilch, Sojamilch oder Molke. Die Proteinquelle kann neben ihrer natürlichen Form auch verdünnt oder konzentriert vorliegen, solange dies nicht das Vermischen mit dem Stabilisator negativ beeinflusst.

Die Begriffe "Sojamilch", "Reismilch" und "Hafermilch" werden im Rahmen dieser Anmeldung mehrfach verwendet und bezeichnen einen wässrigen Extrakt aus vermahlenen Sojabohnen, Reis- bzw. Haferkörnem. Die so erhaltenen Produkte werden in den USA als "soy milk", "rice milk" bzw."oat milk" bezeichnet und gelten als pflanzliche Alternativen zu tierischer Milch. Insbesondere Sojamilch hat sich bei Allergikern und Veganern als Ersatz für tierische Milch etabliert. In Deutschland sind die Begriffe "Sojamilch", "Reismilch" und "Hafermilch" als Verkehrsbezeichnungen auf Grund rechtlicher Beschränkungen nicht zulässig. Analoge Produkte, die in Deutschland auf dem Markt sind, werden z.B. als "Sojagetränk" oder "Sojadrink" bezeichnet.

Vorzugsweise wird die Proteinquelle ausgewählt aus Milch tierischer Herkunft, Sojamilch, Molke und Mischungen davon. Besonders bevorzugt sind Kuhmilch und Sojamilch, insbesondere Sojamilch.

Die Menge der Proteinquelle in dem erfindungsgemäßen Proteinpulver ist nicht besonders beschränkt. Im Hinblick auf die Eignung des erfindungsgemäßen Proteinpulvers zur Herstellung eines Trübstoffes bzw. Nahrungsergänzungsmittels liegt die Menge des Proteins in dem Proteinpulver üblicherweise bei 10 bis 95 Gew.%, noch bevorzugter 10 bis 90 Gew.%, besonders bevorzugt 15 bis 85 Gew.%, am meisten bevorzugt ist eine Menge von 20 bis 75 Gew.%.

Außerdem enthält das erfindungsgemäße Proteinpulver einen Stabilisator, ausgewählt aus verestertem Pektin und/oder Carboxymethylcellulose. Wie vorstehend ausgeführt, dient der Stabilisator dazu, die Proteinquelle oder das Gemisch zu stabilisieren. Dabei verbindet sich der Stabilisator mit dem Protein und bildet ein Schutzkolloid um die Proteinmoleküle. Dadurch wird eine Aggregation der Proteinmoleküle bei der Trocknung verhindert, was zu einer Stabilität der Trübung im Getränk führt. Das erfindungsgemäße Proteinpulver besitzt eine verbesserte Stabilität, was vermuten lässt, dass die Schutzwirkung des Stabilisators noch wirksamer erreicht wird.

Die Art des Pektins ist nicht besonders beschränkt, solange die vorstehend genannte Eigenschaft des Pektins, das Protein zu stabilisieren, nicht beeinträchtigt wird. Pektin ist ein lineares Polysaccharid aus teilweise mit Methanol veresterten $\alpha$-1,4-verknüpften D-Galacturonsäuremolekülen. Die Molmasse beträgt etwa 20.000 bis 100.000 g/mol. Für das erfindungsgemäße Proteinpulver sind Pektine mit einer höheren Molmasse bevorzugt. Deshalb beträgt die Molmasse vorzugsweise 40.000 bis 100.000 g/mol, noch bevorzugter 60.000 bis 100.000 g/mol.

Das Pektin kann natürlicher oder synthetischer Herkunft sein. Auf Grund ihrer Verfügbarkeit sind natürliche Pektine bevorzugt. Dabei sind insbesondere Äpfelpektin, das in der Apfelsaftproduktion gewonnen wird, Zitruspektin, das in der Zitrussaftproduktion gewonnen wird, aber auch Pektin von Sonnenblumenkronen und Zuckerrübenschnipseln gebräuchlich. Äpfel- und Zitruspektin sind besonders bevorzugt.

Wie vorstehend beschrieben, sind die freien Carboxylgruppen des Pektins teilweise mit Methanol verestert. Der Veresterungsgrad sollte oberhalb von 50% liegen. Bevorzugt ist ein Veresterungsgrad von 60 bis 90%, noch bevorzugter 70 bis 85%, am meisten bevorzugt 72 bis 80%. Pektin mit den vorstehend genannten Veresterungsgraden ist handelsüblich erhältlich oder kann vom Hersteller auf Wunsch entsprechend eingestellt werden.

Die Art der Carboxymethylcellulose ist nicht besonders beschränkt, solange die vorstehend genannte Eigenschaft der Carboxymethylcellulose, das Protein zu stabiliseren, nicht beeinträchtigt wird. Carboxymethylcellulose ist der Glykolsäureether der Cellulose und liegt vorzugsweise in Form des Natriumsalzes vor. Das mittlere Molekülgewicht beträgt ca. 80.000 bis 800.000, vorzugsweise 100.000 bis 400.000, noch bevorzugter 200.000 bis 300.000. Der Substitutionsgrad beträgt 0,5 bis 1,5, vorzugsweise 0,7 bis 1,2, am meisten bevorzugt 0,7 bis 0,9. Carboxymethylcellulose ist handelsüblich mit diesen Eigenschaften erhältlich und kann entsprechend ausgewählt werden.

Die Menge an Stabilisator, die zusammen mit dem Protein in dem erfindungsgemäßen Proteinpulver vorliegt, sollte ausreichend sein, um eine Stabilisierung des Proteins in sauren Erfrischungsgetränken zu gewährleisten. Vorzugsweise liegt die Menge an Stabilisator in einem Bereich, der üblich ist, um die Proteinmoleküle zu stabilisieren. Bevorzugte Mengen des Stabilisators in dem Proteinpulver liegen bei 0,5 bis 40 Gew.%, noch bevorzugter 1 bis 30 Gew.%, besonders bevorzugt 2 bis 25 Gew.%, am meisten bevorzugt 4 bis 20 Gew.%.

Das Proteinpulver kann auch andere Inhaltsstoffe enthalten, die für diese Zwecke üblich sind. Beispielsweise kann das erfindungsgemäße Proteinpulver neben dem Protein und dem Stabilisator Aromen, Genußsäuren, Füllstoffe, Vitamine, Antioxidantien, Farbstoffe und/oder Säureregulatoren enthalten.

Der wesentliche Unterschied des erfindungsgemäßen Proteinpulvers gegenüber herkömmlichen Trübstoffen auf Proteinbasis liegt darin, dass die Proteinquelle oder das Gemisch mit dem Stabilisator einer Verfahrensfolge in flüssigem Zustand unterzogen werden, die sich positiv auf die Eigenschaften des erhaltenen Proteinpulvers auswirkt. Dabei werden die Proteinmoleküle zusammen mit den Stabilisatormolekülen derart verändert, dass auch bei einem sauren pH-Wert eine hohe Stabilität des Proteinpulvers nach Trocknung und Rückverdünnung erhalten wird.

Die wesentlichen Verfahrensschritte wurden vorstehend aufgeführt und werden im Folgenden ausführlicher beschrieben.

Zuerst wird die Proteinquelle oder das Gemisch mit einem Stabilisator, ausgewählt aus verestertem Pektin und/oder Carboxymethylcellulose, vermischt. Da die Proteinquelle selbst flüssig ist, muß keine weitere Flüssigkeit zugegeben werden. Sollte die Proteinquelle in konzentrierter Form vorliegen, ist es aber bevorzugt, dass die Komponenten zusätzlich in einem flüssigen Medium vermischt werden. Bei dem flüssigen Medium handelt es sich vorzugsweise um Wasser. Besonders bevorzugt um entionisiertes Wasser. Vorzugsweise werden die Komponenten, wenn die Proteinquelle in konzentrierter Form vorliegt, in 1 bis 50 Gew.% entionisiertem Wasser gelöst, besonders bevorzugt in 3 bis 43 Gew.%, am meisten bevorzugt in 5 bis 40 Gew.% entionisiertem Wasser gelöst.

Der Stabilisator wird in der Proteinquelle oder der Proteinquelle und dem flüssigen Medium gelöst. Wenn ein flüssiges Medium eingesetzt wird, wird vorzugsweise zuerst die Proteinquelle zu dem flüssigen Medium gegeben und danach wird der Stabilisator hinzugefügt, um ihn aufzulösen.

Danach erfolgt ein Erhitzen des Gemisches. Deshalb wird das Gemisch vorzugsweise auf eine Temperatur.von 70 bis 95°C, besonders bevorzugt auf 85 bis 95°C, am meisten bevorzugt auf 90°C erhitzt.

Das Erhitzen wird üblicherweise für eine Dauer von 0,1 bis 5 Minuten, vorzugsweise 0,2 bis 4 Minuten, noch bevorzugter 0,3 bis 3 Minuten, am meisten bevorzugt 0,5 bis 2 Minuten durchgeführt. Dieser Erhitzungsschritt dient zum Haltbarmachen, aber auch zum vollständigen Hydratisieren und Quellen des Pektins.

Falls erwünscht, kann der Stabilisator zuvor in Wasser hydratisiert werden. Dazu wird die Stabilisatorfösung vorzugsweise erhitzt. Dazu wird das Gemisch vorzugsweise auf eine Temperatur von 70 bis 95°C, besonders bevorzugt auf 85 bis 95°C, am meisten bevorzugt auf 90°C erhitzt. Das Erhitzen bei diesem Hydratisierungsschritt wird üblicherweise für eine Dauer von 0,1 bis 5 Minuten, vorzugsweise 0,2 bis 4 Minuten, noch bevorzugter 0,3 bis 3 Minuten, am meisten bevorzugt 0,5 bis 2 Minuten durchgeführt.

Als nächstes wird nach dem Erhitzen das Gemisch homogenisiert. Die Homogenisation dient dazu, um die Schutzhülle zwischen Protein- und Stabilisatormolekülen auszubilden. Bevorzugte Homogenisationsbedingungen sind 25 bis 400 bar, besonders bevorzugt 30 bis 300 bar, am meisten bevorzugt 50 bis 250 bar.

Die Homogenisation kann aber auch gleichzeitig mit dem Erhitzen stattfinden. In diesem Fall läuft die Homogenisation nicht nur mit den genannten Drücken, sondern auch mit den vorstehend genannten Erhitzungsbedingungen ab.

Es ist bevorzugt, dass die Homogenisation als zweistufiges Verfahren durchgeführt wird. Üblicherweise wird die Homogenisation daher bei 50/25 bis 300/100 bar, vorzugsweise 100/30 bis 300/75, besonders bevorzugt 150/50 bis 250/50 bar durchgeführt. Mit dem zweistufigen Verfahren kann eine bessere Verteilung der Fette und eine bessere Ausbildung der Schutzhülle zwischen Protein und Stabilisator erhalten werden.

Danach wird das Gemisch getrocknet, um das erfindungsgemäße Proteinpulver zu erhalten. Zur Trocknung können übliche Trocknungsverfahren, die im Stand der Technik bekannt sind, eingesetzt werden. Übliche Trocknungsverfahren beinhalten Sprühtrocknung, Gefriertrocknung, Vakuumtrocknung und Walzentrocknung. Besonders bevorzugt wird das Gemisch sprühgetrocknet.

Die Trocknungsbedingungen sind nicht besonders beschränkt und können entsprechend modifiziert werden, solange ein pulverförmiges Material erhalten werden kann. Es werden je nach Trocknungsverfahren die jeweils üblichen Verfahrensbedingungen, die dem Fachmann bekannt sind, eingehalten.

Da das Gemisch vor dem Trocknungsschritt gegebenenfalls noch sehr warm ist, nämlich z.B. 70 bis 95°C, ist es aus verfahrenstechnischen Gründen bevorzugt, das Gemisch vor der Trocknung abzukühlen. Dabei reicht es aus, wenn das Gemisch auf 15 bis 30°C, vorzugsweise auf 18 bis 23°C, d.h. Umgebungstemperatur, abgekühlt wird.

Es ist möglich, dass der pH-Wert des Gemisches vor dem Trocknen auf < 4,5, üblicherweise 4,3 bis 4,0, noch bevorzugter 4,1 bis 3,8 abgesenkt wird. Die Absenkung des pH-Wertes findet üblicherweise mit einer Säure statt. Im Hinblick darauf, dass das erfindungsgemäße Proteinpulver in der Lebensmittelindustrie eingesetzt werden soll, sollte die Säure gesundheitlich unbedenklich sein. Bevorzugt wird eine Genusssäure oder ein Gemisch von Genusssäuren verwendet.

Genusssäuren sind organische Säuren, die als saure Geschmacksstoffe für fruchtige oder andere Geschmackskombinationen vielseitige Verwendung in der Lebensmittelproduktion und im Haushalt finden. Übliche Genusssäuren sind Äpfel-, Wein-, Zitronen-, Essig-, Milch- und Fumarsäure. Besonders bevorzugt sind Milchsäure, Zitronensäure, Äpfelsäure oder Weinsäure, am meisten bevorzugt ist Milchsäure.

Die Absenkung des pH-Wertes erfolgt durch ein herkömmliches Verfahren. Dabei wird üblicherweise die Säure langsam zu dem Gemisch hinzugefügt, und der pH-Wert des Gemisches wird beobachtet. Sobald der gewünschte pH-Wert erreicht ist, wird die Säurezufuhr gestoppt.

Dieser Schritt findet üblicherweise vor der Trocknung statt, d.h., die pH-Wertabsenkung kann nach dem Vermischen der Proteinquelle mit Stabilisator in dem flüssigen Medium oder nach dem optionalen Hydratisationsschritt erfolgen. Bevorzugt wird der pH-Wert vor der Erhitzung abgesenkt, d.h. nachdem der Stabilisator und die Proteinquelle miteinander vermischt wurden.

Das so erhaltene erfindungsgemäße Proteinpulver besitzt eine gewünschte Konsistenz, ist gut unter herkömmlichen Bedingungen haltbar und kann auf einfache Weise gelagert werden. Insbesondere muss es nicht sofort als Trübstoff oder Nahrungsergänzungsmittel in einem Getränk verarbeitet werden. Eine übliche Haltbarkeit bei Temperaturen von 18°C bis 23°C liegt bei 6 bis 12 Monaten.

Die erfindungsgemäßen Wirkungen des so erhältlichen Proteinpulvers zeigen sich insbesondere, wenn es zu einem proteinhaltigen Getränk verarbeitet wird. Das Proteinpulver benötigt aufgrund seiner getrockneten Form keine aufwändigen Lagerbedingungen und ist lange Zeit haltbar. Aufgrunddessen eignet es sich ausgezeichnet für eine Getränkeherstellung im industriellen Maßstab.

Das Getränk, in dem das erfindungsgemäße Proteinpulver enthalten ist, zeichnet sich durch eine ansprechende stabile Trübung aus, ohne dass unerwünschte geschmackliche oder farbliche Veränderungen auftreten und gesundheitliche Bedenken vorliegen.

Das erfindungsgemäße Getränk wird erhalten, indem das erfindungsgemäße Proteinpulver in einem flüssigen Medium gelöst wird. Daraus wird dann ein Getränk auf übliche Weise hergestellt.

Das flüssige Medium ist üblicherweise die Getränkebasis und wird deshalb vorzugsweise ausgewählt aus alkoholfreien Erfrischungsgetränken oder Ausgangsstoffen dafür. Dazu zählen Fruchtsäfte, Fruchtnektare, Fruchtsaftgetränke, Moste, Gärgetränke ohne Alkohol, Gemüsesäfte, Tees und teeähnliche Erzeugnisse, einschließlich Früchtetees, Schwarztees, Grüntees- und Kombucha-Erzeugnisse, Aufgussgetränke, gesüßte oder ungesüßte Getränke auf Trink- oder Mineralwasserbasis mit oder ohne Zusatz von Kohlendioxid, Limonaden, koffeinhaltige Limonaden und Colagetränke, Tonicgetränke, Getränke, enthaltend mindestens einen der folgenden Bestandteile: Vitamine, Spurenelemente, Ballaststoffe und Aromen, wie Frucht- oder Teearomen. Fruchtsäfte zeichnen sich durch einen Fruchtgehalt von 100% aus, Fruchtnektare besitzen einen Fruchtgehalt von mindestens 20-50%, und Fruchtsaftgetränke besitzen einen Fruchtgehalt von mindestens 6%. Diese Fruchsäfte bzw. fruchtsafthaltigen Getränke sind auf der Basis von Direktsäften oder Fruchtsaftkonzentraten. Das flüssige Medium wird besonders bevorzugt ausgewählt aus der Gruppe, bestehend aus Fruchtsäften und Fruchtnektaren.

Das erfindungsgemäße Proteinpulver kann auch nur in Trink- oder Mineralwasser gelöst werden, und danach werden die weiteren Zusatzstoffe, die zur Herstellung der jeweiligen Getränkeart benötigt werden, hinzugefügt. Diese Zusatzstoffe beinhalten je nach Getränkeart vorzugsweise Fruchtsaftkonzentrat, Gemüsekonzentrat, Teekonzentrat, Limonadenkonzentrat oder Colakonzentrat, aber auch Vitamine, Mineralstoffe, Säureregulatoren, Pektin, Aromen können enthalten sein.

Das Proteinpulver wird in dem Getränk in einer ausreichenden Menge gelöst, um als Trübungsmittel bzw. als Nahrungsergänzungsmittel geeignet zu sein. Üblicherweise liegt das erfindungsgemäße Proteinpulver in dem Getränk in einer Menge von 0,1 bis 10 Gew.%, bevorzugt 0,2 bis 8 Gew.%, noch bevorzugter 0,3 bis 6 Gew.%, am meisten bevorzugt 0,5 bis 5 Gew.% vor.

Nachdem das Proteinpulver aufgelöst wurde, wird die erhaltene Flüssigkeit üblicherweise erhitzt, um das Getränk haltbar zu machen. Dazu wird die Flüssigkeit vorzugsweise auf eine Temperatur von 70 bis 130 °C, vorzugsweise 80 bis 95 °C, besonders bevorzugt 85 bis 90 °C erhitzt.

Das Erhitzen wird üblicherweise mit 10-20 Pasteurisationseinheiten (für Säfte und saure Getränke) durchgeführt, besonders bevorzugt mit 10-15 PE. Formel für PE:

$$PE = t \cdot 10^{1/z \cdot (T-TB)}$$

T= Pasteurisationstemperatur [°C]
TB= Bezugstemperatur = 80°C
t= Pasteurisationszeit [min]
z= Z-Wert = 10 (für Säfte)

Zuletzt wird die Flüssigkeit homogenisiert, bevor das Getränk abgefüllt wird. Es können übliche Homogenisationsbedingungen eingesetzt werden, die dem Fachmann bei der Getränkeherstellung bekannt sind. Bevorzugte Homogenisationsbedingungen sind oben im Zusammenhang mit der Proteinpulverherstellung beschrieben.

Da die Flüssigkeit nach der Homogenisation gegebenenfalls noch sehr warm ist, nämlich z.B. 70. bis 130 °C, ist es aus verfahrenstechnischen Gründen bevorzugt, die Flüssigkeit vor dem Abfüllen abzukühlen. Dabei reicht es aus, wenn das Gemisch auf 15 bis 30°C, vorzugsweise auf 18 bis 23°C, d.h. Umgebungstemperatur, abgekühlt wird.

Das Getränk kann aber auch sofort nach dem Auflösen des Proteinpulvers zum Verzehr geeignet sein.

Außerdem ist es möglich, dass der pH-Wert nach dem Auflösen des Pulvers auf < 4,5 angesäuert wird. Dieser Schritt ist nicht notwendig, wenn bei der Herstellung des Proteinpulvers, wie vorstehend beschrieben, der pH-Wert bereits auf < 4,5 abgesenkt wurde.

Die Absenkung des pH-Werts findet üblicherweise mit einer Säure statt. Bevorzugte Säuren und Verfahrensbedingungen sind die gleichen, wie sie vorstehend bei der Absenkung des pH-Wertes vor dem Trocknen des erfindungsgemäßen Proteinpulvers beschrieben werden.

Das erfindungsgemäße proteinhaltige Getränk zeichnet sich durch eine deutliche Verbesserung bezüglich der Haltbarkeit aus. So können erfindungsgemäße proteinhaltige Getränke 20 bis 24 Wochen stabil sein. Dies ist bei Getränken mit herkömmlichen Trübungsmitteln auf Proteinbasis nicht der Fall. Häufig wird bereits bei der Abfüllung eines solchen Getränkes ein deutliches Sediment beobachtet. Auch durch Homogenisation lässt sich dieser Effekt nur bedingt beseitigen. Das Getränk ist nur wenige Wochen stabil. Die Gründe dafür liegen in der schon beschriebenen Hitzeschädigung der Proteine bei der Trocknung.

Die folgenden Beispiele erläutern die vorliegende Erfindung.

Beispiel 1:

98,7 Gew.% Sojamilch werden mit 1,3 Gew.% Pektin vermischt. Anschließend wird erhitzt auf 90°C für 1 min, homogenisiert bei 250/50 bar und abgekühlt auf Umgebungstemperatur. In dem anschließenden Sprühtrocknungsprozeß wird aus der flüssigen Basis ein Pulver erhalten mit einem Proteingehalt von 40 Gew.%. Anschließend werden 25 g des so gewonnene Proteinpulvers in einem Liter Fruchtsaftgetränk mit 30 Gew.% Fruchtgehalt gelöst, der pH-Wert auf pH 3,9 mit Zitronensäure eingestellt und so ein proteinangereichertes Getränk erhalten. Es folgt eine Erhitzung auf 90°C für 1 min. und eine Homogenisierung bei 250/50 bar. Anschließend wird das Getränk abgekühlt. Die Stabilität eines so gewonnenen Getränks zeigt über 20 Wochen keine Ringbildung. Die Stabilität im Hinblick auf die Sedimentbildung ist gut.

Beispiel 2:

97,5 Gew.% Sojamilch werden mit 1,3 Gew.% Pektin vermischt und mit 1,2 Gew.% Milchsäure auf pH Wert von 3,9 gebracht. Anschließend wird das Gemisch auf 90°C, 1 min. erhitzt, homogenisiert bei 250/50 bar und abgekühlt auf Umgebungstemperatur. In dem anschließenden Sprühtrocknungsprozeß wird aus der flüssigen Basis ein Pulver erhalten mit einem Proteingehalt von 40 Gew.%.
Anschließend werden 25 g des so gewonnenen Proteinpulvers in einem Liter Fruchtsaftgetränk mit 30% Fruchtgehalt gelöst, der pH-Wert auf pH 3,9 mit Na-Citrat eingestellt und so ein proteinangereichertes Getränk erhalten. Es folgt eine Erhitzung auf 90°C für 1 min. und eine Homogenisierung bei 250/50 bar. Anschließend wird das Getränk abgekühlt.
Die Stabilität eines so gewonnenen Getränks zeigt über 24 Wochen keine Ringbildung Die Stabilität im Hinblick auf die Sedimentbildung ist sehr gut.

Vergleichsbeispiel 1:

20 Gew.% Sojamilch werden mit 0,2 Gew.% Pektin versetzt und im Anschluss direkt zu einem Fruchtsaftgetränk mit 30 Gew.% Fruchtgehalt, erhalten aus Fruchtsaftkonzentrat, gegeben. Der pH Wert wird mit Zitronensäure auf pH 3,9 eingestellt.
Das Gemisch wird auf 90°C für 1 min. erhitzt, homogenisiert bei 250/50 bar und anschließend abgekühlt auf Umgebungstemperatur.
Die Stabilität eines so gewonnenen Getränks zeigt über 8 Wochen keine Ringbildung Die Stabilität im Hinblick auf die Sedimentbildung ist mäßig.

Vergleichsbeispiel 2:

60 Gew.% konzentrierte Sojamilch werden mit 37,4 Gew.% Wasser und 1,5 Gew.% Pektin vermischt und mit 1,1 Gew.% Milchsäure auf einen pH Wert von 3,9 gebracht. Anschließend wird das Gemisch auf 90°C, 1 min. erhitzt, homogenisiert bei 250/50 bar und abgekühlt auf Umgebungstemperatur.

200g/L des flüssigen Gemischs werden mit einem Fruchtsaftgetränk mit 30 Gew.%% Fruchtgehalt, erhalten aus Fruchtsaftkonzentrat, versetzt. Der pH Wert wird mit Na-Citrat auf pH 3,9 eingestellt.

Das Getränk wird anschließend erhitzt auf 90°C für 1 min., homogenisiert bei 250/50 bar und abgekühlt auf Umgebungstemperatur.

Die Stabilität eines so gewonnenen Getränks zeigt über 12 Wochen keine Ringbildung Die Stabilität im Hinblick auf die Sedimentbildung ist akzeptabel.

Vergleichsbeispiel 3:

2,5 Gew.% Sojamilchpulver werden mit 0,3 Gew.% Pektin versetzt und im Anschluss direkt zu einem Fruchtsaftgetränk mit 30 Gew.% Fruchtgehalt gegeben. Der pH Wert wird mit Zitronensäure auf pH 3,9 eingestellt. Das Gemisch wird auf 90°C, 1 min. erhitzt, homogenisiert bei 250/50 bar und anschließend abgekühlt auf Umgebungstemperatur.

Das so gewonnene Getränk ist nicht stabil. Es bildet sich sofort Sediment.

Vergleichsbeispiel 4:

12,5 Gew.% Sojamilchpulver werden mit 1,5 Gew.% Pektin vermischt und in 84,9 Gew.% Wasser eingerührt. Die Lösung wird mit 1,1 Gew.% Milchsäure auf einen pH Wert von 3,9 gebracht. Anschließend wird das Gemisch erhitzt auf 90°C, 1min, homogenisiert bei, 250/50 bar und abgekühlt auf Umgebungstemperatur.

200g/L des flüssigen Gemischs werden mit einem Fruchtsaftgetränk mit 30 Gew.% Fruchtgehalt, erhalten aus Fruchtsaftkonzentrat, versetzt. Der pH Wert wird mit Na-Citrat auf pH 3,9 eingestellt.

Das Getränk wird anschließend erhitzt auf 90°C, 1min., homogenisiert bei 250/50 bar und abgekühlt auf Umgebungstemperatur.

Das so gewonnene Getränk ist nicht stabil. Es bildet sich sofort Sediment.

**Patentansprüche**

1. Proteinpulver, enthaltend mindestens eine Proteinquelle und einen Stabilisator, ausgewählt aus verestertem Pektin und/oder Carboxymethylcellulose, erhältlich durch:

    Vermischen einer Proteinquelle mit einem Stabilisator,
    Erhitzen des Gemisches,
    Homogenisieren des Gemisches und Trocknen des Gemisches, um ein Pulver zu erhalten,

wobei die Proteinquelle ausgewählt wird aus Kuhmilch, Schafsmilch, Ziegenmilch, Stutenmilch, Molke, Sojamilch, Hafermilch und Reismilch.

2. Proteinpulver nach Anspruch 1, **dadurch gekennzeichnet, dass** das Vermischen der Proteinquelle mit dem Stabilisator in einem flüssigen Medium stattfindet.

3. Proteinpulver nach Anspruch 1 oder 2, **dadurch gekennzeichnet, dass** vor dem Trocknen der pH-Wert auf < 4,5 abgesenkt wird.

4. Proteinpulver nach einem der Ansprüche 1 bis 3, **dadurch gekennzeichnet, dass** der Proteingehalt in dem Proteinpulver in einer Menge von 10 bis 90 Gew.% vorliegt.

5. Proteinpulver nach einem der Ansprüche 1 bis 3, **dadurch gekennzeichnet, dass** die Proteinquelle ausgewählt wird aus Kuhmilch, Sojamilch, Molke und Mischungen davon.

6. Proteinpulver nach einem der Ansprüche 1 bis 4, **dadurch gekennzeichnet, dass** der Stabilisator in dem Proteinpulver in einer Menge von 1 bis 30 Gew. % vorliegt.

7. Verfahren zur Herstellung eines Proteinpulvers gemäß Anspruch 1, enthaltend mindestens eine Proteinquelle und einem Stabilisator, ausgewählt aus verestertem Pektin und/oder Carboxymethylcellulose, umfassend die folgenden Schritte:

    Vermischen einer Proteinquelle mit einem Stabilisator,
    Erhitzen des Gemisches,
    Homogenisieren des Gemisches und Trocknen des Gemisches, um ein Pulver zu erhalten,

wobei die Proteinquelle ausgewählt wird aus Kuhmilch, Schafsmilch, Ziegenmilch, Stutenmilch, Molke, Sojamilch, Hafermilch und Reismilch.

8. Verwendung des Proteinpulvers nach einem der Ansprüche 1 bis 6 zur Herstellung eines proteinhaltigen Getränks.

9. Verfahren zur Herstellung eines proteinhaltigen Getränks, umfassend die folgenden Schritte:

    Auflösen eines Proteinpulvers nach einem der Ansprüche 1 bis 6 in einem flüssigen Medium,

Erhitzen der Flüssigkeit und
Homogenisieren der Flüssigkeit.

**10.** Verfahren nach Anspruch 9, **dadurch gekennzeichnet, dass** die Flüssigkeit nach dem Auflösen des Pulvers auf einen pH-Wert von < 4,5 angesäuert wird.

**11.** Verfahren zur Herstellung eines proteinhaltigen Getränks, umfassend den folgenden Schritt: Auflösen eines Proteinpulvers nach einem der Ansprüche 1 bis 6 in einem flüssigen Medium, Einsatz zum Sofortverzehr.

**Claims**

**1.** A protein powder, including at least one protein source and one stabilizer, selected from esterified pectin and/or carboxylmethylcellulose, which is obtainable by:

mixing a protein source with a stabilizer,
heating the mixture
homogenizing the mixture, and drying the mixture to obtain a powder,

wherein the protein source is selected among cow milk, ewe's milk, goat milk, mare milk, whey, soy milk, oat milk and rice milk.

**2.** A protein powder as claimed in claim 1, **characterized in that** the mixing of the protein source with a stabilizer takes place in a liquid medium.

**3.** A protein powder as claimed in claim 1 or 2, **characterized in that** the pH value is lowered to < 4.5 before drying.

**4.** A protein powder as claimed in one of claims 1 to 3, **characterized in that** the protein content in the protein powder exists in a quantity of 10 to 90 percent by weight.

**5.** A protein powder as claimed in one of claims 1 to 3, **characterized in that** the protein source is selected from cow milk, soy milk, whey and mixtures thereof.

**6.** A protein powder as claimed in one of claims 1 to 4, **characterized in that** the stabilizer in the protein powder exists in a quantity of 1 to 30 percent by weight.

**7.** A method of producing a protein powder, including at least one protein source and one stabilizer selected from esterified pectin and/or carboxylmethylcellulose, comprising the following steps:

mixing the protein source with a stabilizer,
heating the mixture
homogenizing the mixture and drying the mixture to obtain a powder,

wherein the protein source is selected among cow milk, ewe's milk, goat milk, mare milk, whey, soy milk, oat milk and rice milk.

**8.** Use of the protein powder as claimed in one of claims 1 to 6 for producing a protein-containing drink.

**9.** A method of producing a protein-containing drink, comprising the following steps:

dissolving a protein powder according to one of claims 1 to 6 in a liquid medium,
heating the liquid, and
homogenizing the liquid.

**10.** A method as claimed in claim 9, **characterized in that** the liquid after dissolving the powder is acidified to a pH value of < 4.5.

**11.** A method of producing a protein-containing drink, comprising the following steps:

dissolving a protein powder according to one of claims 1 to 6 in a liquid medium, use for instant consumption.

**Revendications**

**1.** Poudre de protéine, contenant au moins une source de protéine et un stabilisateur, sélectionnée à partir de pectine estérifiée et/ou de carboxyméthylcellulose, pouvant être obtenue par :

mélange d'une source de protéine avec un stabilisateur,
chauffage du mélange,
homogénéisation du mélange et séchage du mélange pour obtenir une poudre,
la source de protéine étant sélectionnée à partir de lait de vache, de lait de brebis, de lait de chèvre, de lait de jument, de petit-lait, de lait de soja, de lait d'avoine et de lait de riz.

**2.** Poudre de protéine selon la revendication 1, **caractérisée en ce que** le mélange de la source de protéine avec le stabilisateur a lieu dans un agent liquide.

**3.** Poudre de protéine selon la revendication 1 ou 2, **caractérisée en ce que** le pH est abaissé à < 4,5 avant le séchage.

4. Poudre de protéine selon l'une des revendications 1 à 3, **caractérisée en ce que** la teneur en protéine dans la poudre de protéine est présente dans une quantité de 10 à 90% en poids.

5. Poudre de protéine selon l'une des revendications 1 à 3, **caractérisée en ce que** la source de protéine est sélectionnée à partir de lait de vache, de lait de soja, de petit-lait et de mélanges de ces produits.

6. Poudre de protéine selon l'une des revendications 1 à 4, **caractérisée en ce que** le stabilisateur est présent dans la poudre de protéine dans une quantité de 1 à 30% en poids.

7. Procédé pour la préparation d'une poudre de protéine selon la revendication 1, contenant au moins une source de protéine et un stabilisateur sélectionnée à partir de pectine estérifiée et/ou de carboxyméthylcellulose, comprenant les étapes suivantes:

   mélange d'une source de protéine avec un stabilisateur,
   chauffage du mélange,
   homogénéisation du mélange et séchage du mélange pour obtenir une poudre,
   la source de protéine étant sélectionnée à partir de lait de vache, de lait de brebis, de lait de chèvre, de lait de jument, de petit-lait, de lait de soja, de lait d'avoine et de lait de riz.

8. Utilisation de la poudre de protéine suivant l'une des revendications 1 à 6 pour la préparation d'une boisson contenant de la protéine.

9. Procédé pour la préparation d'une boisson contenant de la protéine, comprenant les étapes suivantes :

   dissolution d'une poudre de protéine selon l'une des revendications 1 à 6 dans un agent liquide,
   chauffage du liquide,
   homogénéisation du liquide

10. Procédé selon la revendication 9, **caractérisé en ce que** le liquide est acidifié pour atteindre un pH de < 4,5 après la dissolution de la poudre.

11. Procédé pour la préparation d'une boisson contenant de la protéine comprenant l'étape suivante:

   dissolution d'une poudre de protéine selon l'une des revendications 1 à 6 dans un agent liquide, mise en oeuvre pour une consommation immédiate.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6190709 A
- EP 1338210 A

**In der Beschreibung aufgeführte Nicht-Patentliteratur**

- **Klavons et al.** *J Food Sci,* 1992, vol. 57 (4), 945-947
- **Jasentuliyana et al.** *J Sci Food Agric,* 1998, vol. 78, 389-394
- *Food-Technology,* 2001, vol. 55 (12), 65
- *Food-Hydrocolloids,* 1996, vol. 10 (4), 431-439
- **Gerard M. et al.** *Journal of Food Science,* 2002, vol. 67 (1), 113-119
- **Arvind et al.** *Process Biochemistry,* 2000, vol. 35 (8), 777-785
- **Delben S. et al.** *Journal of Food Engineering,* 1997, vol. 33 (3), 325-346
- **Diftis N. et al.** *Food Chemistry,* 2003, vol. 81, 1-6